# EUROPEAN PATENT APPLICATION

(11) **EP 4 300 287 A1**
(43) Date of publication of application: **03.01.2024**
(21) Application number: 22182601.9
(22) Date of filing: 01.07.2022
(51) Int. Cl.: G06F 3/16

(54) **METHOD, SYSTEM, VEHICLE, AND STORAGE MEDIUM RELAYING INSTRUCTIONS TO IN-VEHICLE DEVICES**

(71) Applicant: Bayerische Motoren Werke Aktiengesellschaft, 80809 München (DE)
(72) Inventor: Zaki, Tarek, 81829 München (DE)

(57) **Abstract**

Given a method of providing in-vehicle media entertainment to passengers of a vehicle, it is an objective of the present invention to improve interaction of in-vehicle speech assistance. The objective is solved by a computer-implemented method (400) for controlling a device of a plurality of devices (130) available in a vehicle (101), the method comprising steps: receive (410) sound waves at a microphone, wherein the sound waves bears a user voice call for a command, such as a media player command; determine (420) at least one instruction by performing at least a speech recognition of a digital representation of the sound waves; determine (430) at least one user location; select (440) at least one target device by correlating the user location with at least one location of the plurality of devices; relay (450) the instruction to the at least one target device; and execute (460) the instruction on the at least one target device.

## Description

### Technical field

The invention relates to a method, system, vehicle, and storage medium relaying instructions to in-vehicle device.

### Background

Modern cars are equipped with speech assistants, analogical to Siri in iPhones. Unlike the consumer world, the car dictates that users are sitting in close vicinity, in one room, and each with own entertainment system (e.g. display with integrated apps). According the invention, the car may identify a location of a user, and bias the behavior the speech assistant response according to the location of the user.

In the state of the art, each entertainment system typically has own speech assistant. This may limit the user or may even confuse him/her in some scenarios. For example, consider the scenario where the speech assistant in the head unit is triggered by a so-called "wakeup word" from any seat. This speech assistant is capable to execute commands only on the head unit. So when a rear-seat passenger asks to the speech assistant to play a certain movie on the rear-seat entertainment (RSE) system. The speech assistant on the head unit, however, is not capable to execute commands on RSE, and thereby, disappointing the user.

The state of the art solutions thus involves further interactions between a controller of the vehicle and the user in order to relay the instructions to the intended device, such as pushing further buttons on a target device. The further interaction is complicated both for the user and the technical solution. In addition, the front user won't be able to send a command to a rear device, e.g. for serving use cases. For example, when a father is the driver and would like to play something on the RSE for the rear seated child.

### Summary

The deficiency is solved by a computer-implemented method for controlling a device of a plurality of devices available in a vehicle, the method comprising steps: a) receive sound waves at a microphone, wherein the sound waves bears a user voice call for a command, such as a media player command; b) determine at least one instruction, such as a media playing instruction, by performing at least a speech recognition of a digital representation of the sound waves; c) determine at least one user location, preferably by determining a direction of the sound waves and/or a location of an origin of the sound waves; d) select at least one target device by correlating the user location with at least one location of the plurality of devices; e) relay the instruction to the at least one target device; and f) execute the instruction on the at least one target device.

The first step may be to trigger a voice assistant via (a) wake up word or (b) push-to-talk, both from any occupant in the whole vehicle. All input triggering methods may lead to the same one-voice-assistant that serves the users inside the car.

Media playing instruction is general and this term may include commands such as "skip 20 seconds" or "Play Toy Story on Netflix". The term may include also for example commands such as "switch profile to Tarek".

In one example, the automatic correlation occurs if the user did not mention explicitly which target device is intended.

Advantages include enabling a holistic in-vehicle speech assistant that is capable to execute all commands on all equipped devices, such as head unit, co-driver entertainment, rear-seat entertainment, or even personally connected devices.

The deficiency is further solved by the system and storage medium and vehicle of claims 8, 9, and 10. Some preferable embodiments are defined in the dependent claims.

In one embodiment, step d) includes adjusting a confirmation request based on the selected at least one target device, and
wherein step e) and step f) are conditional on a positive response to the confirmation request.

In one embodiment, the user voice call of step a) comprises a user voice call for controlling a part of the vehicle, such as closing a window; and wherein the target device is the part of the vehicle.

In one embodiment, the user voice call of step a) comprises a user voice call for playing a media; wherein determine an instruction of step b) comprises determine a media for playing; wherein execute the media player instruction of step e) comprises sending electrical signals to a loudspeaker and/or to a display, according to a content of the media; and wherein preferably the loudspeaker and/or the display plays the media.

In one embodiment, the method further comprises the steps of: determine if a user explicitly mentions an explicit device, and if so, attempt to direct the media player instruction to the explicit device; determine if a type of media of the media player instruction is compatible with only one compatible device, and if so, attempt to direct the media player instruction to the compatible device; determine that only one device of the plurality of media playing devices is a turned on device, and if so, attempt to direct the media player instruction to the turned on device; determine if the media player instruction is successfully executable only on one executable device, and if so, attempt to direct the media player instruction to the executable device; direct the media player instruction to a head unit of the plurality of media playing devices or request the user to specify the intended media playing device; and wherein attempt to direct the media player instruction to the compatible device comprise determining if the media player instruction is executable, and if so, execute the media player instruction, and if not, provide the user with an error message.

In one embodiment, the vehicle comprises at least two microphones; and wherein determine a direction of the sound waves and/or a location of an origin of the sound waves is based on a sound wave triangulation.

In one embodiment, the select of step d) comprises directing the instruction to the device of the plurality of devices that is considered closest if physical location based on the direction of the sound waves and/or the location of the origin of the sound waves.

In one embodiment, the locations of the plurality of media playing devices are at least partly determined based on a Bluetooth direction finding feature of at least one of the media playing devices.

The deficiency is further solved by a system for relaying instructions, such as a media player instruction, to at least one device, such as a media playing device of a plurality of media playing devices available in a vehicle, the system comprising: the vehicle, the vehicle comprising: a controller; at least one microphone; a plurality of devices, such as media playing devices; and preferably one or more speakers and/or one or more displays; wherein the controller is configured to execute the method of any of the preceding claims.

The deficiency is further solved by a computer-readable storage medium having stored therein a computer program comprising instructions to cause the controller as described above to execute the method as described herein.

The deficiency is further solved by a vehicle having a passenger compartment; wherein the vehicle comprises the system as described herein; wherein compartment comprises the at least one microphone and the plurality of devices.

### Detailed description of the figures

In the following, embodiments of the invention are described with respect to the figures, wherein
- Fig. 1: depicts a system relaying media player instruction to a media playing device.
- Fig. 2: depicts a method relaying media player instruction to a media playing device according to an embodiment of the invention
- Fig. 3: depicts a method relaying media player instruction to a media playing device according to a preferred embodiment of the invention

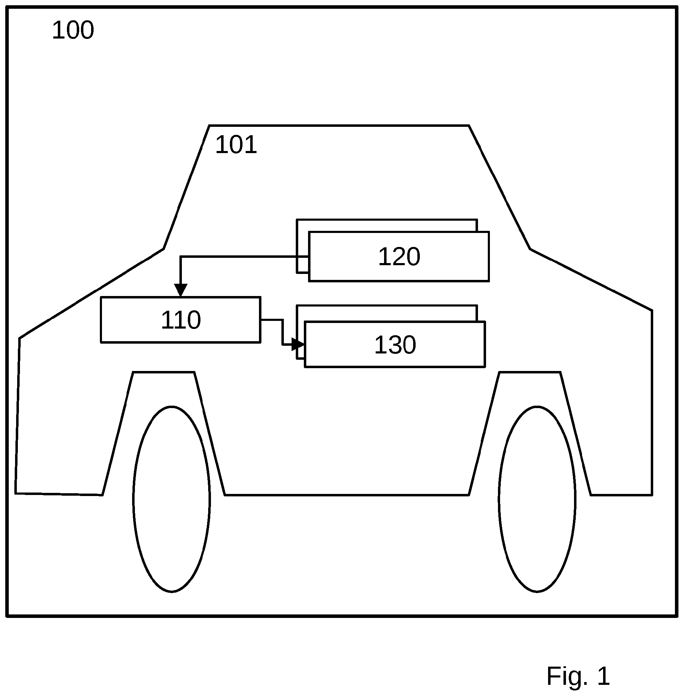

Fig. 1 depicts a system 100 relaying or directing media player instruction to a device, such as a media playing device. The system 100 comprise a vehicle 101, the vehicle 101 further comprising a controller 110, at least one microphone 120, a plurality of devices, such as media playing devices 130, the controller 110 is configured to execute a method, relaying media player instruction to a device, such as a media playing device as described herewith. The vehicle and/or media playing devices may further comprise one or more speaker.

In one architecture, the controller 110 is capable to execute a method to any of the devices (such as media players) 130. In another architecture, the command given to the controller 110 is sent to the cloud, then based on the outcome, this command is sent back via the internet connection to one (or more) of the media players 130. Then inside these media players, there is/are hidden assistant that executes the command on the media player(s).

Furthermore, the controller 110 may be capable to execute the command, but sometimes the controller sends the voice command to the cloud to be analyzed and executed.

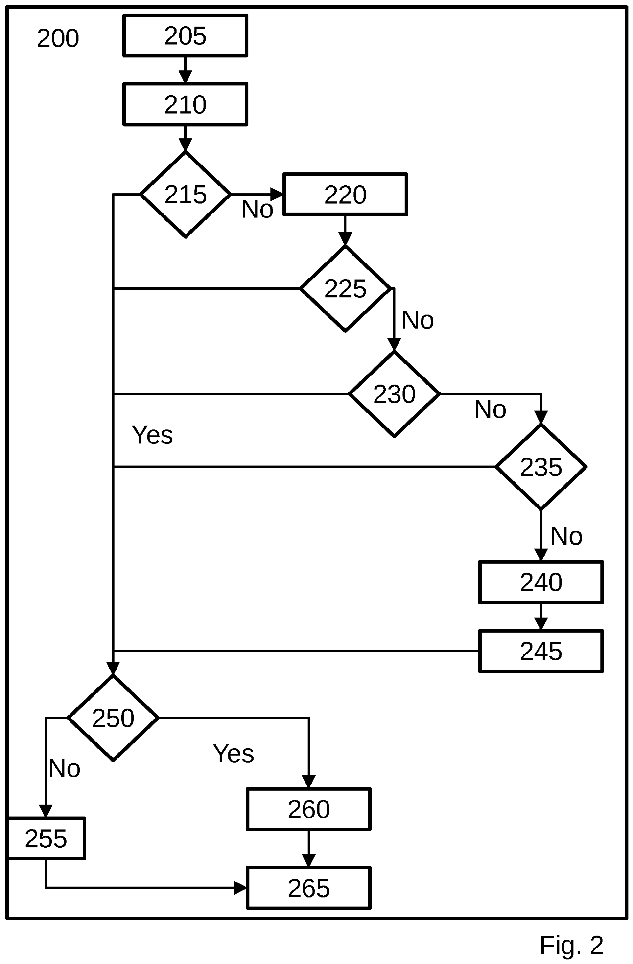

Fig. 2 depicts a method relaying or directing media player instruction to a device (such as media playing device) according to an embodiment of the invention. The method may trigger 205 a voice/speech assistant via (a) wakeup word, or (b) push to talk buttons from any seat. The method further comprises a user call to a speech assistance and gives a command 210. This step may be handled by a speech assistant in a head unit of a vehicle, such as by a controller 110 as described herewith.

The method may further include performing speech recognition algorithm to understand and classify the command given by the user.

The method may also identify the location from which the user gave the command.

The method comprises the steps: determine 215 if a user explicitly mentions an explicit device, and if so, attempt to relay or direct the media player instruction to the explicit device. As an example, the step may be done by two type of explicit targeting, e.g. by brand (e.g. head unit) and by name (e.g. rear-seat entertainment system). The name can be given or can also be configured by the user. The method may further include the speech assistant only considers devices that are in the vehicle 220. The method further incudes determine 225 if a type of media of the media player instruction is compatible with only one compatible device, and if so, attempt to relay or direct the media player instruction to the compatible device. As an example, the user asks speech assistant to play a movie, which is only executable on the rear-seat entertainment (i.e. in this case the head unit is not configured to play movies).

Awareness of the capability of the media playing devices may be achieved using a device labeled list, wherein devices able to play movies are labelled e.g. "video" and devices only capable of playing sounds are labelled e.g. "audio". The information may also be derived from connection meta information.

The method further includes determine 230 that only one device of the plurality of media playing devices 130 is a turned on device, and if so, attempt to relay or direct the media player instruction to the turned on device, and preferably determine if the media player instruction is successfully executable only on one executable device, and if so, attempt to relay or direct the media player instruction to the executable device. Block 235 includes checking if the speech assistant can smartly associate the command (from implicit, secondary or meta information) to one of the target devices. As an example scenario, a passenger is playing music (e.g. Beatles) on a first device (e.g. head unit), and another passenger is playing a movie (e.g. Toy Story) on a second device (e.g. on a rear-seat entertainment system (RSE)). An instruction to "pause the movie" will be relayed to the second device, although the first device in principle can play movies, since the second device is the only device currently playing a movie. The method further incudes relaying 245 the media player instruction to a head unit of the plurality of media playing devices or request the user to specify the intended media playing device.

Block 240 is responsible for identifying what is the intended target device based on the location information (derived from data processing of the voice signal from the user). In other words, the algorithm decides to bias the command to the device located at the position where the occupant has triggered the voice command.

Blocks 225, 230, 235, and 240: (a) may not necessarily be in this specific order; (b) they all may even have the same level and done simultaneously at the same time (i.e. not successively). In this case, the diagram of Fig. 2 will change accordingly; (c) they're optional (the system may include block 225 only, or 225 and 235 (but not 230), or whichever combination depending on the capabilities of the system. The method may include block 225 and/or block 230 and/or block 235.

Blocks 225-240 of Fig. 2 have equal priority and must not be in that specific order in the diagram.

A variant of block 225, includes, instead of checking if a type of media of the media player instruction is compatible with only one compatible device, the program defines explicitly a set of commands to specific devices. E.g. pre-program the algorithm that always directs audio commands to head unit and all video commands to rear-seat. In this case it is similar to block 225, but different because it is pre-set by the program.

As an example of block 245, the speech assistant biases commands to head unit, or even smartly asks the user "Did you mean on the head unit?" or "Did you mean the RSE". The method may further include determining 250 if the media player instruction is executable on the target device, and if so, execute 255 the media player instruction, and if not, provide the user with an error message 260. The method ends with block 265.

The "Smartly" feature may only be possible if the speech assistant is capable to identify beforehand from where the command is coming from. From example, if the command came from the front passenger, then the speech assistant may ask "Did you mean the co-driver entertainment system?"

Using multiple integrated microphones 120, some vehicles 101 are able to detect the zone at which the user has spoken in the vehicle. For example: In the step, where the speech assistant is confining only specific devices, the speech assistant can confine to the devices which are at the detected zone, from where the voice command has been given. Alternative, or in addition, in the last step where the speech assistant may ask the user if a specific device is meant, the speech assistant can smartly ask the user if the in-vehicle device located at the zone, from where the voice command has been given, is indeed meant by the user. So not just asking randomly for any device, but rather ask the user if the nearest in-vehicle integrated device was meant - which is in most cases indeed the targeted device.

One prominent example of modifying the behavior of the speech assistant depending on (a) the location at which the command was said, (b) the location of the target device, and (c) the command itself (e.g. ambiguous command or not) is the following:
A) If the driver (or front passenger) asks for something to be played on the rear-seat entertainment system, and if the content the user asked for is ambiguous, meaning that there are multiple options possible, the driver typically cannot see what is on the screen to select: So the speech assistant shall speak up the different options being displayed so that the driver can select the right choice.
B) If a rear-seat passenger asks the speech assistant for something, and if it is ambiguous, then the options are typically displayed to the user on the screen, and thus, no need for the speech assistant to speak up the different options. I.e. the rear-seat passenger can just say, play the 2nd option, and it will be relayed to the passengers' entertainment system.

A solution may further include equipping every device in the vehicle with a speech assistant. Only one of these (ideally the one in the head unit) is openly interacting with all occupants to serve their needs. This means that all driver's and passengers' commands are first relayed to the speech assistant in the head unit, who/which is then processing and relaying the command based on a method proposed herein to identify which is the targeted device.

Based on the decision, the command may be passed to a specific speech assistant in the corresponding target device to execute the command. This process is transparent to the user, and is performed in the background without confusing the user. Passing the commands from one device to another can be done via the in-vehicle boardnet or via the internet cloud.

Any input device in the vehicle, such as microphone via a wakeup word or any physical/digital button, may trigger only this main speech assistant (in the head unit) who is capable to interact with the user.

As an example, the method may work by: A) all devices are connected to the same account of the speech assistant, and/or B) the devices are signed-in with different accounts but they're automatically/manually associated or connected in the backend. For the latter, if the speech assistant server knows which devices are in the same vehicle (e.g. via a unique vehicle ID), then the association of these devices can be done automatically, despite different signed-in accounts.

According to the method of Fig. 2, when a user starts talking 210 to the main speech assistant (i.e. ideally in the head unit), the speech assistant first checks 215 if the target device is explicitly mentioned by the user. If yes, then the speech assistant checks 250 if the command is executable on the explicitly mentioned target device (and maybe also check if this targeted device is connected in the vehicle (not shown in the figure). If not, then the speech assistant can optionally 220 consider only devices in the vehicle (e.g. in-vehicle entertainment systems and Bluetooth connected smartphones) and then goes through a series of optional questions (225-235) before deciding on the target device. If none of the questions can be answered, the speech assistant then either executes 245 the command on a default device or asks the user if the meant device is so and so.

The reason for optionally confining the speech assistant to in-vehicle devices only (in case the targeted device is not mentioned explicitly) may be out of simplicity. Theoretically speaking, the user can execute a command also on a device at his smart home.

Typically, when the speech assistant is called/talking, a visual is depicted on the display. Not to distract all occupants, the system may decide to show the visual only on the displays located at the zone at which the occupant is talking. For example, a rear-seat passenger on the right side addresses the speech assistant, so only his/her display and his/her personally connected device shows the overlaying visual illustrating that the integrated speech assistant is talking.

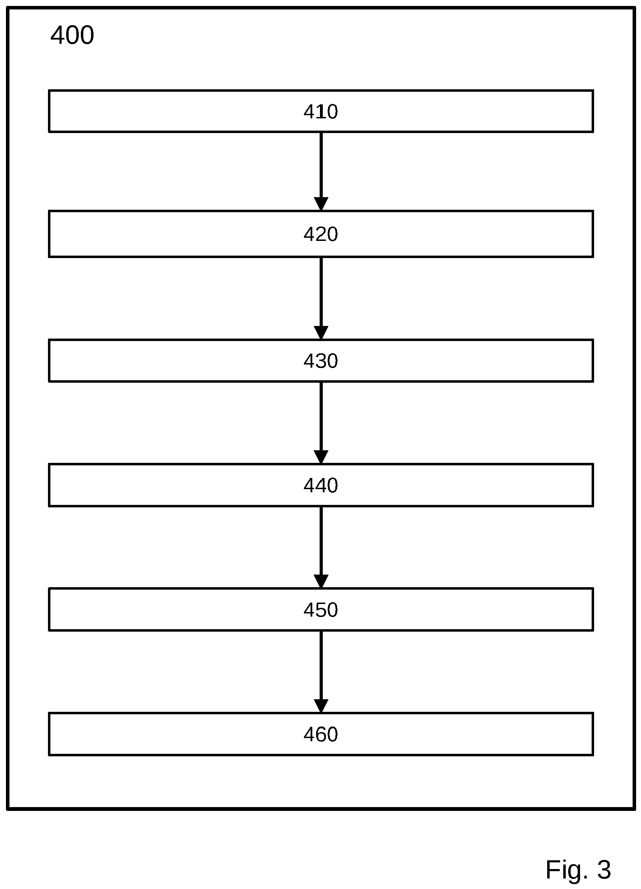

Fig. 3 depicts a computer-implemented method 400 for controlling a device, in particular a media playing device, of a plurality of devices 130 available in a vehicle 101, the method comprising steps: receive 410 sound waves at a microphone, wherein the sound waves bears a user voice call for a media player command; determine 420 at least one instruction, such as a media playing instruction, by performing at least a speech recognition of a digital representation of the sound waves; determine 430 at least one user location, preferably by determining a direction of the sound waves and/or a location of an origin of the sound waves; select 440 at least one target device by correlating the user location with at least one location of the plurality of devices; relay 450 the instruction to the at least one target device; and execute 460 the instruction on the at least one target device.

For vehicle mounted device, the location of each device may be specified in a memory of the vehicle. For personally connected devices, determining the location of devices may be more challenging, because the vehicle will not necessary know where the connected device is located. It may however be achieved by either if the personal device (e.g. smartphone) being connected to the dedicated screen via e.g. Bluetooth, or if the vehicle has the capability to identify where the device is located in the vehicle via for example Bluetooth 5.1 direction finding feature.

In some vehicles, only one panoramic roof-mounted display will be at the rear seat. Accordingly, the visual will be depicted on the screen if any of the rear passengers has addressed the speech assistant. So bundling of multiple users to the same device is also possible in some use cases.

The user may give in the settings menu unique names for the devices for direct commands. For example, in BMW, a user can say "Play Beatles on iDrive", where "iDrive" is the name of the central display connected to the head unit.

Finally, the full speech assistant capabilities may be enabled for adult users. But when the devices enable guest/kids profiles or accounts, then the speech assistant can limit the execution of commands that are general in order to avoid undesired commands. An examples of very general commands are "Skip 20 seconds".

One way of detecting the type (guest, kid, adult) of the user is from the account, but in an alternative way the speech assistant may also detect if the command is coming from (a voice of) a child, then the speech assistant automatically limits its capabilities.

### Reference numerals:

- 100: System relaying media player instruction to a device
- 101: Vehicle
- 110: Controller
- 120: At least one microphone
- 130: A plurality of devices, such as media playing devices
- 200: Method relaying instructions, such as media player instruction
- 205: Trigger a voice/speech assistant via (a) wakeup word, or (b) push to talk buttons from any seat
- 210: User calls a speech assistance and gives a command
- 215: Did the user explicitly mention a target device?
- 220: Speech assistant considers devices that are in the vehicle
- 225: Is the command executable only on one device?
- 230: Is only one device currently switched ON?
- 235: Can speech assistant smartly associate the command to one device?
- 240: Determine device based on speech origin
- 245: Speech assistant considers the source device as the default target, or asks the user if a device is meant.
- 250: Is the command executable on the target device?
- 255: Error message is sent
- 260: Execute command on this target device
- 265: End
- 400: Method relaying instructions to device
- 410: Receive sound waves at microphone
- 420: Determine instruction
- 430: Determine user location
- 440: Select target device
- 450: Relay instruction
- 460: Execute instruction

## Claims

1. A computer-implemented method (400) for controlling a device, in particular a media playing device, of a plurality of devices (130) available in a vehicle (101), the method comprising steps:
a) receive (410) sound waves at a microphone, wherein the sound waves bears a user voice call for a command, such as a media player command;
b) determine (420) at least one instruction, such as a media playing instruction, by performing at least a speech recognition of a digital representation of the sound waves;
c) determine (430) at least one user location, preferably by determining a direction of the sound waves and/or a location of an origin of the sound waves;
d) select (440) at least one target device by correlating the user location with at least one location of the plurality of devices;
e) relay (450) the instruction to the at least one target device; and
f) execute (460) the instruction on the at least one target device.

2. The method of claim 1,
wherein step d) includes adjusting a confirmation request based on the selected at least one target device, and
wherein step e) and step f) are conditional on a positive response to the confirmation request.

3. The method of claim 1,
wherein the user voice call of step a) comprises a user voice call for controlling a part of the vehicle, such as closing a window; and
wherein the target device is the part of the vehicle.

4. The method of claim 1,
wherein the user voice call of step a) comprises a user voice call for playing a media;
wherein determine an instruction of step b) comprises determine a media for playing;
wherein execute the media player instruction of step e) comprises sending electrical signals to a loudspeaker and/or to a display, according to a content of the media; and
wherein preferably the loudspeaker and/or the display plays the media.

5. The method of any of the preceding claims, further comprising the steps of:
- determine (215) if a user explicitly mentions an explicit device, and if so, attempt to direct the media player instruction to the explicit device;
- determine (225) if a type of media of the media player instruction is compatible with only one compatible device, and if so, attempt to direct the media player instruction to the compatible device;
- determine (230) that only one device of the plurality of media playing devices is a turned on device, and if so, attempt to direct the media player instruction to the turned on device;
- determine (235) if the media player instruction is successfully executable only on one executable device, and if so, attempt to direct the media player instruction to the executable device;
- direct (245) the media player instruction to a head unit of the plurality of media playing devices or request the user to specify the intended media playing device; and
wherein attempt (250) to direct the media player instruction to the compatible device comprise determining if the media player instruction is executable, and if so, execute (255) the media player instruction, and if not, provide the user with an error message (260).

6. The method of any of the preceding claims,
wherein the vehicle comprises at least two microphones (120); and
wherein determine a direction of the sound waves and/or a location of an origin of the sound waves is based on a sound wave triangulation.

7. The method of any of the preceding claims,
wherein the select of step d) comprises directing the instruction to the device of the plurality of devices (130) that is considered closest if physical location based on the direction of the sound waves and/or the location of the origin of the sound waves.

8. The method of any of the preceding claims,
wherein the locations of the plurality of media playing devices (130) are at least partly determined based on a Bluetooth direction finding feature of at least one of the media playing devices.

9. A system (100) for relaying instructions, such as a media player instruction, to at least one device, such as a media playing device of a plurality of media playing devices (130) available in a vehicle (101), the system comprising:
- the vehicle (101), the vehicle (101) comprising:
∘ a controller (110);
∘ at least one microphone (120);
∘ a plurality of devices, such as media playing devices (130); and
∘ preferably one or more speakers and/or one or more displays;
wherein the controller (110) is configured to execute the method of any of the preceding claims.

10. A computer-readable storage medium having stored therein a computer program comprising instructions to cause the controller (110) of claim 9 to execute the method of any of the claims 1 to 8.

11. A vehicle having a passenger compartment;
wherein the vehicle comprises the system according to claim 9;
wherein compartment comprises the at least one microphone (120) and the plurality of devices (130).
